(19) Europäisches Patentamt
European Patent Office
Office européen des brevets

(11) EP 3 222 650 B1

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **17158653.0**

(22) Anmeldetag: **01.03.2017**

(51) Internationale Patentklassifikation (IPC):
***C08G 73/02*** *(2006.01)* ***C08G 81/02*** *(2006.01)*
***C08G 63/06*** *(2006.01)* ***C08G 63/08*** *(2006.01)*

(52) Gemeinsame Patentklassifikation (CPC):
**C09K 23/16; C08G 73/0206**

(54) **DISPERGIERMITTEL**

DISPERSANTS

AGENT DE DISPERSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2016 EP 16162122**

(43) Veröffentlichungstag der Anmeldung:
**27.09.2017 Patentblatt 2017/39**

(73) Patentinhaber: **Evonik Operations GmbH**
**45128 Essen (DE)**

(72) Erfinder:
- **Favresse, Philippe**
  **40880 Ratingen (DE)**
- **Rödiger, Sandra**
  **44795 Bochum (DE)**
- **Kreft, Kim Judith**
  **45359 Essen (DE)**
- **Schmidt, Julia**
  **45276 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 999 185** **EP-B1- 1 999 185**
**WO-A1-01/21298** **KR-B1- 100 712 019**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Dispergiermittel auf Basis von Polyaminen oder Polyiminen enthaltend Seitenketten basierend auf zwei oder mehreren Poly-(oxy-$C_{1-6}$-alkylencarbonyl)-Verbindungen und Verfahren zu deren Herstellung und deren Verwendung.

Dispergiermittel, die eine oder mehrere Poly-(oxy-$C_{1-6}$-alkylencarbonyl)-Ketten (POAC-Kette) enthalten, sind bekannt und werden gewöhnlich durch Polymerisation mit ε-Caprolacton hergestellt. Sie werden in der Regel zum Dispergieren von partikulären Feststoffteilchen in einem organischen Lösungsmittel eingesetzt und enthalten entweder saure und/oder basische Endgruppen.

Dispergiermittel, die endständige Basengruppen enthalten, werden in der Anmeldung WO 94/21368 beschrieben und umfassen die Reaktionsprodukte von Polyethylenimin mit ε-Caprolacton in Gegenwart von aliphatischen und hydroxyaliphatischen Carbonsäuren als Kettenabbruchmittel während der Polymerisation des ε-Caprolactons. Nachteilig an den genannten Dispergiermitteln ist deren hohe Tendenz zur Kristallisation, sei es in An- oder Abwesenheit von Lösungsmitteln, die eine Verwendung solcher Dispergiermittel in der Praxis erschwert. Die auskristallisierten Dispergiermittel müssen vor deren Verwendung entsprechend erwärmt und anschließend homogenisiert werden.

WO 99/55763 und WO 01/21298 beschreiben die Herstellung von Dispergiermitteln basierend auf die Verwendung von mindestens zwei Lactonen. Die Herstellung solcher Dispergiermittel ermöglicht die Unterdrückung der Kristallisation. Allerdings sind die dort eingesetzten Lactone teuer und nicht immer auf dem Markt frei verfügbar.

EP 1 999 185 offenbart ein Dispergiermittel auf Basis von Polyethylenimin (PEI) mit Seitenketten basierend auf Poly-(oxy-C1-6-alkylencarbonyl)-Verbindungen. Weitere Seitenketten auf Basis von Alkylsäuren weist das Dispergiermittel nicht auf.

Die Aufgabe der vorliegenden Erfindung ist daher die Bereitstellung von Dispergiermitteln, die einfach und kostengünstig herzustellen sind und nur geringe Tendenz zur Kristallisation neigen, gleichzeitig keine Einbuße in den technischen Anwendungstests, wie etwa der rub-out-Test, der Farbtest oder der Viskositätstest, aufweisen.

Zur Lösung der Aufgabe wird ein Dispergiermittel gemäß des Hauptanspruchs vorgeschlagen.

Es hat sich gezeigt, dass durch Amidierung des Polyamins oder Polyimins mit Alkylsäuren (B) die Kristallisation des erfindungsgemäßen Dispergiermittels reduziert bzw. unterdrückt werden kann. Die erfindungsgemäßen Dispergiermittel sind bei Temperaturen unterhalb von 25°C weder kristallin noch fest, auch in organischen Lösungsmittel kristallisieren sie nicht als Feststoff aus.

Bevorzugt sind die erfindungsgemäßen Dispergiermittel bei Raumtemperatur fließfähig.

Die erfindungsgemäßen Dispergiermittel basieren auf Polyaminen oder Polyiminen, die primäre Aminogruppen aufweisen. An den Polyaminen oder Polyiminen werden Seitenketten basierend auf zwei oder mehrere Poly-(oxy-$C_{1-6}$-alkylencarbonyl)-Verbindungen (A) und Seitenketten basierend auf Alkylsäuren (B) chemisch gebunden. Dabei kann es sich um Amidbindungen oder um salzartige Bindungen zwischen den primären Aminogruppen der Polyamine oder Polyimine und den Seitenketten basierend auf zwei oder mehreren Poly-(oxy-$C_{1-6}$-alkylencarbonyl)-Verbindungen (A) und Alkylsäuren (B) handeln, wobei Verknüpfungen über Amidbindungen bevorzugt sind.

Beispiele geeigneter Polyamine sind Polyallylamin und Polyvinylamin. Beispiele geeigneter Polyimine sind Poly-($C_{2-4}$)-alkylenimin (im folgenden PAi) und insbesondere Polyethylenimin (im folgenden PEI).

Demgemäß ist das erfindungsgemäß eingesetzte Poly($C_{2-4}$-alkylenimin) bevorzugt ein Polyethylenimin (PEI), welches linear oder verzweigt sein kann. Vorzugsweise handelt es sich um multifunktionelle, kationische Polyethylenimine mit einer verzweigten Polymerstruktur. Ihre Konstitution wird durch die Summenformel $-(CH_2-CH_2-NH)_n-$ mit $4 < n < 14000$ wiedergegeben. Es handelt sich dabei in der Regel um klare bis leicht trübe, farblose bis gelbliche Flüssigkeiten. Ihre Viskosität ist abhängig vom Molekulargewicht, Konzentration und Verzweigungsgrad.

Polyethylenimine sind aminische Polymere die eine hyperverzweigten Polymerstruktur aufweisen. Die Verteilung an primären, sekundären und tertiären Aminen in diesen hyperverzweigten Polymerstrukturen weist im Schnitt ca. 38% an primären Aminen, 36% an sekundären Aminen und 26% an tertiären Aminen auf. Diese wird typischerweise mittels NMR Spektroskopie (13C) bestimmt. Eine Methode, die in der Zeitschrift Journal of Macromolecular Science 'Carbon-13 NMR analysis of branched polyethylenimine (1985, A22 (5-7), 877) beschrieben wird. Alternativ kann die Aminverteilung von diesen Polymeren in den technischen Informationsmaterialien der Rohstofflieferanten entnommen werden.

Das erfindungsgemäß eingesetzte Polyamin oder Polyimin, insbesondere das bevorzugte Poly ($C_{2-4}$-alkylenimin), vorzugsweise das eingesetzte Polyethylenimin, weist insbesondere ein mittleres Molekulargewicht Mw zwischen 200 und 600.000 g/mol, besonders bevorzugt zwischen 400 und 100.000 g/mol, ganz besonders bevorzugt zwischen 600 und 30.000 g/mol auf. Die auf das Zahlenmittel bezogene mittlere Molmasse des Polyamins oder Polyimins beträgt vorzugsweise 200 bis 25.000 g/mol, bevorzugter 500 bis 10.000 g/mol.

Bevorzugte Polyethylenimine sind beispielsweise unter dem Namen Lupasol® von der Fa. BASF SE oder dem Namen EPOMIN™ der Fa. Nippon Shokubai kommerziell erhältlich.

Erfindungsgemäß weist das erfindungsgemäße Dispergiermittel Seitenketten basierend auf zwei oder mehre-

ren Poly-(oxy-$C_{1-6}$-alkylencarbonyl)-Verbindungen (A) auf. Im Folgenden werden diese Seitenketten auch POAC-Ketten genannt.

Bevorzugt sind die Poly-(oxy-$C_{1-6}$-alkylencarbonyl)-Verbindungen (A) ausgewählt aus der Gruppe von linearen Hydroxy-$C_{1-6}$-alkylencarbonsäuren oder Lactonen.

Beispiele geeigneter Hydroxy-$C_{1-6}$-alkylencarbonsäuren sind Glycol-, Milch-, Hydroxyvalerian-und Hydroxycapronsäuren.

Besonders bevorzugt sind die Poly-(oxy-C,_s-alkylencarbonyl)-Verbindungen (A) ausgewählt aus der Gruppe von Lactonen, wie beispielsweise β-Propiolacton, γ-Butyrolacton, δ-Valerolacton und ε-Caprolacton.

Die Poly-(oxy-$C_{1-6}$-alkylencarbonyl)-Verbindungen (A) sind im Rahmen der vorliegenden Erfindung vorzugsweise Homopolymere, wobei sie unterschiedliche Kettenlänge aufweisen.

Weiterhin weist das erfindungsgemäße Dispergiermittel Seitenketten basierend auf Alkylsäuren (B) auf, die ebenfalls an den Polyaminen oder Polyiminen gebunden vorliegen.

Vorzugsweise weisen die Alkylsäuren (B) 1 bis 35 C-Atome auf, bevorzugt nicht mehr als 20 C-Atome und noch bevorzugter nicht mehr als 12 C-Atome.

Die Alkylsäuren (B) sind ausgewählt aus der Gruppe Essig-, Methoxyessig-, Propion-, Pentan-, Hexan-,Capryl-, Caprin-, Laurin-, oder Stearinsäure.

Vorzugsweise weist das erfindungsgemäße Dispergiermittel eine Säurezahl (SZ) von < 10 mg KOH/g, bevorzugt < 5 mg KOH/g auf.

Vorzugsweise weist das erfindungsgemäße Dispergiermittel eine Aminzahl (AZ) von > 100 mg KOH/g, bevorzugt > 120 mg KOH/g auf.

Vorzugsweise weist das Dispergiermittel ein Verhältnis von Säurezahl zu Aminzahl >10, bevorzugt >20 auf.

Vorzugsweise ist das molare Verhältnis der Summe aus Seitenketten basierend auf zwei oder mehreren Poly-(oxy-$C_{1-6}$-alkylencarbonyl)-Verbindungen (A) und Seitenketten basierend auf Alkylsäure (B) zu primären Aminogruppen der eingesetzten Polyamine oder Polyimine kleiner 1. Das bedeutet, dass der molare Anteil der Summe der Seitenketten basierend auf zwei oder mehreren Poly-(oxy-$C_{1-6}$-alkylencarbonyl)-Verbindungen (A) und Seitenketten basierend auf Alkylsäure (B) kleiner ist als der molare Anteil der primären Aminogruppen des eingesetzten Polyamins oder Polyimins.

Die Bestimmung des Anteils der primären Aminogruppen in den eingesetzten Polyaminen oder Polyiminen kann mittels NMR Spektroskopie (13C) erfolgen. Eine Methode, die in der Zeitschrift Journal of Macromolecular Science 'Carbon-13 NMR analysis of branched polyethylenimine (1985, A22 (5-7), 877) beschrieben ist.

Üblicherweise ist der Anteil der primären Aminogruppen in den technischen Informationsmaterialien der Rohstofflieferanten aufgeführt.

Das molare Verhältnis zwischen den zwei oder mehreren unterschiedlichen Poly-(oxy-$C_{1-6}$-alkylencarbonyl)-Ketten (A) und den Alkylsäuren (B) sollte zwischen 90/10 und 10/90 sein. Bevorzugter Weise sollte das Verhältnis zwischen (A) und (B) zwischen 80/20 und 20/80 und besonders bevorzugter Weise zwischen 70/30 und 30/70.

Das erfindungsgemäße Dispergiermittel wird mittels der nachfolgenden Formel (I) schematisch dargestellt:

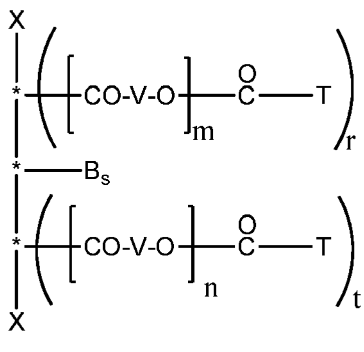

Formel (I)

worin X-*-*-*-X ein Polyamin oder Polyimin ist, wobei sie primäre Aminogruppen aufweisen,

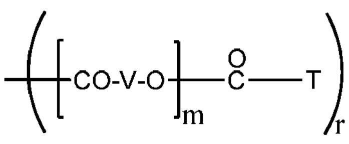

und

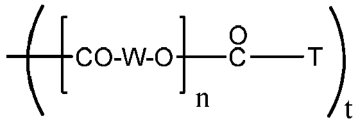

POAC-Ketten sind,

mit T = eine gesättigte oder ungesättigte Alkylgruppe,
V = eine Alkylen- oder Alkenylengruppe der jeweiligen Hydroxy-$C_{1-6}$-alkylencarbonsäuren oder des Lactons,
m und n = jeweils 3 bis 40, wobei m und n voneinander verschieden sind,
r und t = jeweils 1 bis 100, und
B = Alkylsäuren mit s = 1 bis 100, wobei die Alkylsäuren ausgewählt sind aus der Gruppe Essig-, Methoxyessig-, Propion-, Pentan-, Hexan-, Capryl-, Caprin-, Laurin- oder Stearinsäure.

Es ist auch bevorzugt, dass m und n nicht weniger als 5 beträgt. Vorzugsweise ist m nicht größer als 30 und besonders bevorzugt nicht größer als 15.

Die Kettenlänge der Poly-(oxy-$C_{1-6}$-alkylencarbonyl)-Verbindungen (A) zur Bildung der Seitenketten POAC-Ketten am Polyamin oder Polyimin wird durch die Anzahl der Wiederholungseinheiten des Bausteins [-O-V-CO-] dargestellt.

Das Dispergiermittel weist 3 bis 40 Wiederholungseinheiten dieses Bausteins auf. Bevorzugt beträgt die Kettenlänge der Poly-(oxy-$C_{1-6}$-alkylencarbonyl)-Verbindungen (A) nicht mehr als 30 und besonders bevorzugt nicht mehr als 15 Wiederholungseinheiten.

Vorzugsweise betragen r, s und t nicht weniger als 3.

Es ist auch bevorzugt, dass r, s und t nicht größer als 60 sind.

Die erfindungsgemäßen Dispergiermittel können in der Form ihrer Salze mit entweder einer anorganischen Säure oder einer organischen Säure vorliegen. Beispiele solcher Säuren sind Halogenwasserstoffsäuren, wie Salzsäure und Essigsäure. Das erfindungsgemäße Dispergiermittel kann auch in der Form eines quaternären Ammoniumsalzes vorliegen. Solche quaternären Ammoniumsalze können durch Umsetzen mindestens einer der freien Amino- oder Iminogruppen der Dispergiermittel mit alkylierenden Mitteln, wie Alkylhalogeniden, wie z.B. Methylchlorid, oder mit Dialkylsulfaten, wie Dimethylsulfat, erhalten werden.

Das erfindungsgemäße Dispergiermittel kann auch in der Form eines Salzes mit einer "gefärbten Säure" vorliegen. Mit dem Begriff "gefärbte Säure" ist ein organisches Pigment oder ein organischer Farbstoff gemeint, welches bzw. welcher wenigstens eine, vorzugsweise 1 bis 6 Säuregruppen, besonders bevorzugt Sulfon-, Phosphon- oder Carbonsäuregruppen enthält. Eine bevorzugte gefärbte Säure ist Kupferphthalocyanin oder ein anderes stark gefärbtes Pigment und besonders bevorzugt sulfoniertes Kupferphthalocyanin, welches durchschnittlich 0,5 bis 3 Sulfonsäuregruppen pro Molekül enthält.

Ebenfalls Gegenstand der vorliegenden Erfindung ist ein Verfahren zur Herstellung der erfindungsgemäßen Dispergiermittel umfassend die Umsetzung von Polyaminen oder Polyiminen mit mindestens zwei oder mehreren Polymeren basierend auf Poly-(oxy-$C_{1-6}$-alkylencarbonyl)-Verbindungen (A) gemäß

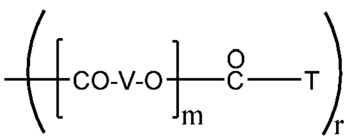

und

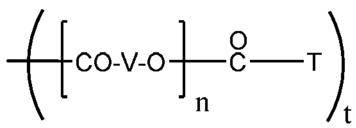

mit T = eine gesättigte oder ungesättigte Alkylgruppe, V = eine Alkylen- oder Alkenylengruppe der jeweiligen Hydroxy-$C_{1-6}$-alkylencarbonsäuren oder des Lactons, m und n = jeweils 3 bis 40, wobei m und n voneinander verschieden sind, r und t = jeweils 1 bis 100,

und Alkylsäuren (B), ausgewählt aus der Gruppe Essig-, Methoxyessig-, Propion-, Pentan-, Hexan, Capryl-, Caprin-,

Laurin- oder Stearinsäure, wobei eine Amidierung von Alkylsäuren (B) mit den Polyaminen oder Polyiminen stattfindet.

Vorzugsweise ist das molare Verhältnis der Summe der Polymeren basierend auf Poly-(oxy-$C_{1-6}$-alkylencarbonyl)-Verbindungen (A) und Alkylsäuren (B) zu primären Aminogruppen der Polyamine oder Polyimine kleiner 1, bevorzugt kleiner 0,9.

Das bedeutet, dass der molare Anteil der Polymere (A) und der Alkylsäuren (B) kleiner ist als der molare Anteil der primären Aminogruppen des Polyamins oder Polyimins.

Das molare Verhältnis zwischen den Polymeren (A) und den Alkylsäuren (B) kann vorzugsweise zwischen 90/10 und 10/90 sein, bevorzugt zwischen 80/20 und 20/80 und besonders bevorzugt zwischen 70/30 und 30/70 betragen.

Vorzugsweise handelt es sich bei den Poly-(oxy-$C_{1-6}$-alkylencarbonyl)-Verbindungen (A) um lineare Hydroxy-$C_{1-6}$-alkylencarbonsäuren oder Lactone, bevorzugt um $\delta$-Valerolacton oder $\varepsilon$-Caprolacton.

Bevorzugt sind die Poly-(oxy-$C_{1-6}$-alkylencarbonyl)-Verbindungen (A) Homopolymere, wobei sie verschiedene Kettenlängen aufweisen. Demzufolge unterscheiden sich die POAC-Seitenketten des erfindungsgemäßen Dispergiermittels in ihrer Kettenlänge.

Vorzugsweise werden die Polymeren separat oder in situ durch Polymerisation der Poly-(oxy-$C_{1-6}$-alkylencarbonyl)-Verbindungen (A) hergestellt und dann für die Umsetzung mit Polyaminen oder Polyiminen und Alkylsäuren (B) eingesetzt.

Es können alle dem Fachmann bekannten Polymerisationsverfahren, wie etwa anionische, kationische oder metallkatalysierte Polymerisation eingesetzt werden. Ebenso vorstellbar sind Substanz- oder Lösungspolymerisation. Es ist hierbei wichtig, dass eine enge Molmassenverteilung der Polymere gewährleistet werden, damit Polymere mit bestimmter Kettenlänge erzielt und für das erfindungsgemäße Verfahren eingesetzt werden können, um POAC-Ketten verschiedener Kettenlänge im Dispergiermittel auszubilden.

In einer bevorzugten Ausführungsform wird eine Ringöffnungspolymerisation der Lactonen zur Herstellung der Polymere eingesetzt. Hierbei können als Katalysatoren Titan Tetraalkyl oder Tetraalkoxylate, wie zum Beispiel Tetraisopropylorthotitanat ($Ti(OiPr)_4$), Tetra 2-Ethylhexanoattitanat ($Ti(2\text{-}Ethylhexanoat)_4$) oder Tetra 2-Ethylhexyltitanat ($Ti(2\text{-}Ethylhexyloxyde)_4$), Zink Salze von organischen Säuren, wie zum Beispiel Zinkacetat ($Zn(Acetat)_2$) oder Zinklactat ($Zn(Lactate)_2$), Zirkonium Salze von aliphatischen Alkoholen, wie zum Beispiel Zirkonium Tetraisopropyloxid ($Zr(OiPr)_4$) oder Zirconium n-butoxide ($Zr(OnBu)_4$), Aryl Sulfonsäuren, wie zum Beispiel Toluolsulfonsäure oder starke organische Säuren wie Halogenessigsäuren, wie zum Beispiel Trifluoroessigsäure, Bismut Alkylate , wie zum Beispiel Bismut Neodecanoat ($Bi(Neodecanoate)_3$), Zinn Alkylate, wie zum Beispiel Zinnoctanoat ($Sn(OCt)_2$) verwendet werden. Zirkonium Tetraisopropyloxid ($Zr(OiPr)_4$) und Zirkonium butoxide ($Zr(OnBu)_4$) werden bevorzugt verwendet.

Bevorzugt werden zur Polymerisation Alkylsäuren als Polymerisationsinitiator, wie beispielsweise aromatische, alizyklische, heterozyklische oder aliphatische Carbonsäuren, die linear oder verzweigt, gesättigt oder ungesättigt sind, eingesetzt.

Vorzugsweise weisen die Alkylsäuren 1 bis 35 C-Atome auf, bevorzugt nicht mehr als 20 C-Atome und noch bevorzugter nicht mehr als 12 C-Atome.

Bevorzugt sind die Alkylsäuren ausgewählt aus der Gruppe Essig-, Methoxyessig-, Propion-, Pentan- , Hexan-,Capryl-, Caprin-, Laurin-, Ricinol-, Stearinsäure oder Hydroxystearinsäure.

Für das erfindungsgemäße Verfahren werden demnach bevorzugt die zuvor hergestellten Polymere mit dem Polyaminen oder Polyiminen und Alkylsäuren (B) umgesetzt.

Bevorzugt wird für die Umsetzung diejenige Alkylsäure (B) eingesetzt, die ebenfalls als Polymerisationsinitiator verwendet wurde. Es wurde vorteilhaft festgestellt, dass eine Amidierung am Polyamin oder Polyimin zur Bildung weiterer Seitenketten eine Kristallisation des Dispergiermittels entgegenwirkt.

Es ist ebenfalls vorstellbar, dass die Reduzierung der Kristallisationsneigung des erfindungsgemäßen Dispergiermittels durch Einstellung eines Unterdrucks während der Umsetzung von Polyaminen oder Polyiminen mit mindestens zwei oder mehreren Polymeren basierend auf Poly-(oxy-$C_{1-6}$-alkylencarbonyl)-Verbindungen (A) und Alkylsäuren (B) erreicht werden kann. Bevorzugt liegt ein Unterdruck bei kleiner als der Normaldruck (1013,25 mbar), besonders bevorzugt liegt er bei 1 - 500 mbar

im Übrigen können für das erfindungsgemäße Verfahren bevorzugt die zu Beginn der Beschreibung aufgeführten Poly-(oxy-$C_{1-6}$-alkylencarbonyl)-Verbindungen (A), Polyamine oder Polyimine und Alkylsäuren (B) eingesetzt werden.

Es konnte festgestellt werden, dass die erfindungsgemäßen Dispergiermittel bei einer Lagerung bei Raumtemperatur auch bis zu zwei Monaten keine Veränderungen aufweisen.

Die erfindungsgemäßen Dispergiermittel sind insbesondere zum Dispergieren eines teilchenförmigen Feststoffs in einem organischen Medium geeignet. Gemäß einem weiteren Aspekt der Erfindung wird eine Zusammensetzung bereitgestellt, die einen teilchenförmigen Feststoff und ein Dispergiermittel gemäß der vorliegenden Erfindung umfasst.

Ebenfalls Gegenstand der vorliegenden Erfindung ist eine Dispersion umfassend Dispergiermittel gemäß der

vorliegenden Erfindung, einen teilchenförmigen Feststoff und ein organisches Medium. Der in der Dispersion vorliegende Feststoff kann irgendein anorganisches oder organisches festes Material sein, welches in dem organischen Medium bei der betreffenden Temperatur im Wesentlichen unlöslich ist und welches in einer feinverteilten Form darin stabilisiert werden soll.

Beispiele geeigneter Feststoffe sind Pigmente für Lösungsmitteltinten, Pigmente; Streckmittel und Füllstoffe für Farben und Kunststoffmaterialien; Farbstoffe, insbesondere Dispersionsfarbstoffe; optische Aufhellungsmittel und textile Zusatzstoffe für Lösungsmittelfarbbäder, Tinten und andere Lösungsmittelanwendungssysteme; Feststoffe für Öl-basierende und Invertemulsionsbohrschlämme; Schmutz und feste Teilchen in Trockenreinigungsflüssigkeiten; teilchenförmige keramische Materialien; magnetische Materialien und magnetische Aufzeichnungsmedien und Biozide, Agrochemikalien und Pharmazeutika, die als Dispersionen in organischen Medien verwendet werden.

Ein bevorzugter Feststoff ist ein Pigment aus irgendeiner der anerkannten Klassen von Pigmenten, die beispielsweise in Third Edition ofthe Colour Index (1971) und nachfolgenden Neubearbeitungen und Ergänzungen dazu unter dem Kapitel mit der Überschrift "Pigmente" beschrieben werden. Beispiele anorganischer Pigmente sind Titandioxid, Zinkoxid, Preußisch-Blau, Cadmiumsulfid, Eisenoxide, Vermillon, Ultramarin und die Chrompigmente, einschließlich Chromaten, Molybdaten und gemischten Chromaten und Sulfaten von Blei, Zink, Barium, Calcium und Gemische und Modifikationen davon die als grünlich-gelbe bis rote Pigmente unter den Namen Primrose-Chrom, Zitrone-,mittleres, Orange-, Scharlachrot- und Rot-Chrom kommerziell erhältlich sind. Beispiele organischer Pigmente sind diejenigen aus der Reihe der Azo-, Diazo-, kondensierten Azo-, Thioindigo-, Indanthron-, Isoindanthron-, Anthanthron-, Anthrachinon-, Isodibenzanthron-, Triphendioxazin-, Chinacridon- und Phthalocyanin-Pigmente, insbesondere Kupferphthalocyanin und dessen am Kern halogenierte Derivate, sowie auch Lacke aus sauren, basischen und beizenden Farbstoffen. Kohlenstoffschwarz verhält sich, obwohl es strikt anorganisch ist, im Hinblick auf seine Dispergiereigenschaften eher wie ein organisches Pigment. Bevorzugte organische Pigmente sind Phthalocyanin-, insbesondere Kupferphthalocyanin-, Monoazo-, Disazo-, Indanthron-, Anthanthron- , Chinacridon- und Kohlenstoffschwarz-Pigmente.

Weitere bevorzugte Feststoffe sind Streckmittel und Füllstoffe, wie Talk, Kaolin, Siliciumdioxid, Baryt und Kreide; teilchenförmige keramische Materialien, wie Aluminiumoxid, Siliciumdioxid, Zirkoniumdioxid, Titandioxid, Siliciumnitrid, Bornitrid, Siliciumcarbid, Borcarbid, gemischte Silicium-Aluminium-Nitride und Metalltitanate, teilchenförmige magnetische Materialien, wie die magnetischen Oxide von Übergangsmetallen, insbesondere Eisen und Chrom, z.B. Gamma-$Fe_2O_3$, $Fe_3O_4$ und mit Kobalt dotierte Eisenoxide, Calciumoxid, Ferrite, insbesondere Bariumferrite und Metallteilchen, insbesondere metallisches Eisen, Nickel, Kobalt und Legierungen davon, und Agrochemikalien, wie die Fungizide Flutriafen, Carbendazim, Chlorthalonil und Mancozeb.

Das in den Dispersionen der Erfindung vorliegende organische Medium ist vorzugsweise ein polares organisches Medium oder ein im Wesentlichen nicht polarer aromatischer Kohlenwasserstoff oder halogenierter Kohlenwasserstoff. Mit dem Begriff "polar" in Bezug auf das organische Medium ist eine organische Flüssigkeit oder ein Harz gemeint, die bzw. das in der Lage ist, mäßige bis starke Bindungen zu bilden, wie es in dem Artikel mit dem Titel "A Three Dimensional Approach to Solubility" von Crowley et al. in Journal of Paint Technology, Band 38, 1966, auf Seite 269 beschrieben ist. Solche organischen Medien haben im Allgemeinen eine Wasserstoffbindungszahl von 5 oder mehr, wie es in dem oben genannten Artikel definiert ist.

Beispiele geeigneter polarer organischer Medien sind Amine, Ether, insbesondere niedere Alkylether, organische Säuren, Ester, Ketone, Glycole, Alkohole und Amide. Zahlreiche spezifische Beispiele solcher mäßig stark Wasserstoffbindender Flüssigkeiten sind in dem Buch mit dem Titel "Compatibility and Solubility" von Ibert Mellan (veröffentlicht 1968 von Noyes Development Corporation) in Tabelle 2.14 auf den Seiten 39 - 40 angegeben. Die in der Veröffentlichung genannten Flüssigkeiten fallen alle in den Bereich des Begriffs für ein polares organisches Medium, und sind somit Bestandteil der vorliegenden Offenbarung.

Bevorzugte polare organische Flüssigkeiten sind Dialkylketone, Alkylester von Alkancarbonsäuren und Alkanolen, insbesondere solche Flüssigkeiten, die bis zu und einschließlich einer Gesamtzahl von 6 Kohlenstoffatomen enthalten. Besonders bevorzugte organische Medien sind Dialkyl- und Cycloalkylketone, wie Aceton, Methylethylketon, Diethylketon, Diisopropylketon, Methylisobutylketon, Diisobutylketon, Methylisoamylketon, Methyl-n-amylketon und Cyclohexanon; Alkylester, wie Methylacetat, Ethylacetat, Isopropylacetat, Butylacetat, Ethylformiat, Methylpropionat, Methoxypropylacetat und Ethylbutyrat; Glycole und Glycolester und Ether, wie Ethylenglycol, 2-Ethoxyethanol, 3-Methoxypropylpropanol, 3-Ethoxypropylpropanol, 2-Butoxyethylacetat, 3-Methoxypropylacetat, 3-Ethoxypropylacetat und 2-Ethoxyethylacetat, Alkanole, wie Methanol, Ethanol, n-Propanol, Isopropanol, n-Butanol und Isobutanol und Dialkyl-und zyklische Ester, wie Diethylether und Tetrahydrofuran.

Die im Wesentlichen nicht polaren Medien, die entweder alleine oder im Gemisch mit den vorgenannten polaren Lösungsmitteln verwendet werden können, sind aromatische Kohlenwasserstoffe, wie Toluol und Xylol, und halogenierte aliphatische und aromatische Kohlenwasserstoffe, wie Trichlorethylen, Perchlorethylen und Chlorbenzol.

Beispiele für geeignete polare Harze als Medium für die Dispersionsform der vorliegenden Erfindung sind solche filmbildenden Harze, die für die Herstellung von Tinten, Farben und Spänen zur Verwendung in zahlreichen Anwendungen wie Farben und Tinten geeignet sind. Beispiele für solche Harze umfassen Polyamide, wie z. B. Versamid*

der Fa. BASF SE oder Zelluloseether, wie Ethylzellulose und Ethylhydroxyethylzellulose. Beispiele von Farbharzen umfassen kurzölige Alkyd/Melaminformaldehydharze, Polyester/Melaminformaldehydharze, wärmehärtende Acryl/Melaminformaldehydharze, langölige Alkydharze und mehrschichtige Harze wie Acryl und Harnstoff/Aldehydharze.

Die Dispersion kann, sofern gewünscht, andere Bestandteile enthalten, zum Beispiel Harze (sofern diese nicht bereits das organische Medium darstellen), Bindemittel, verflüssigende Mittel (wie die in GB-A-1508576 und GB-A-2108143 beschriebenen), sedimentationsverhindernde Mittel, Plastifizierungsmittel, Nivellierungsmittel und Konservierungsmittel.

Die Zusammensetzungen der vorliegenden Erfindung, insbesondere die bevorzugten Dispersionen, enthalten üblicherweise von 5 bis 95 Gew.-% des feinteiligen Feststoffs, wobei die genaue Menge von der Art des Feststoffs und der relativen Dichte des Feststoffs und des organischen Mediums abhängt. Zum Beispiel enthält eine Dispersion, in welcher der Feststoff ein organischer Stoff, wie ein organisches Pigment, ist, bevorzugt von 15 bis 60 Gew.-% des Feststoffs, wohingegen eine Dispersion, bei welcher der Feststoff ein anorganischer Stoff, wie ein anorganisches Pigment, Füllmittel oder Streckmittel, ist, bevorzugt von 40 bis 90 Gew.-% des feinteiligen Feststoffs, basierend auf dem Gesamtgewicht der Dispersion, enthält.

Die erfindungsgemäße Zusammensetzung, insbesondere die erfindungsgemäße Dispersion, kann durch irgendeine der gebräuchlichen Verfahren zur Herstellung von Zusammensetzungen beziehungsweise Dispersionen erhalten werden. Der Feststoff, das organische Medium und das erfindungsgemäße Dispergierharz können in der Regel in jeder beliebigen Reihenfolge gemischt werden. Dabei kann die Mischung einem mechanischen Verfahren zur Verkleinerung der Teilchen des Feststoffs auf eine geeignete Größe unterzogen werden, zum Beispiel durch Kugelmahlen, Perlmahlen, Kiesmahlen oder Kunststoffwalzen. Alternativ kann der Feststoff unabhängig oder in Beimischung mit entweder dem organischen Medium oder dem Dispergierharz zur Verkleinerung seiner Teilchengröße behandelt werden, der andere Bestandteil oder Bestandteile der Zusammensetzung danach zugegeben und die Mischung zur Erzeugung der Zusammensetzung, vorzugsweise der Dispersion gerührt werden.

Falls die Zusammensetzung in trockener Form benötigt wird, ist das flüssige Medium bevorzugt flüchtig, so dass es durch einfache Trennmittel, wie Verdampfung leicht von dem teilchenförmigen Feststoff entfernt werden kann. Es ist jedoch bevorzugt, dass die Dispersion das flüssige Medium enthält.

Falls die trockene Zusammensetzung im Wesentlichen aus dem Dispergierharz und dem teilchenförmigen Feststoff besteht, enthält sie bevorzugt wenigstens 0,2 Gew. %, besonders bevorzugt wenigstens 0,5 Gew.-% und vorzugsweise wenigstens 1,0 Gew.-% des erfindungsgemäßen Dispergierharzes, bezogen auf das Gewicht teilchenförmigen Feststoffs. Bevorzugt enthält die trockene Zusammensetzung nicht mehr als 50 Gew.-% besonders bevorzugt nicht mehr als 20 Gew.-% und vorzugsweise nicht mehr als 10 Gew.-% des erfindungsgemäßen Dispergierharzes, bezogen auf das Gewicht des teilchenförmigen Feststoffs.

Wie oben beschrieben, sind die Dispergierharze der vorliegenden Erfindung besonders geeignet für die Herstellung von Mahlgut. in einer weiteren Ausführungsform der vorliegenden Erfindung kann der teilchenförmige Feststoff in Gegenwart von einem erfindungsgemäßen Dispergierharz und einem filmbildenden Harzbindemittel, gegebenenfalls in Gegenwart eines organischen Mediums, gemahlen werden.

Daher wird gemäß einem weiteren Gesichtspunkt der Erfindung ein Mahlgut zur Verfügung gestellt, das einen teilchenförmigen Feststoff, Dispergierharz gemäß der vorliegenden Erfindung und ein filmbildendes Harz enthält.

Üblicherweise enthält das Mahlgut von 20 bis 70 Gew.-% teilchenförmigen Feststoff in Bezug auf das Gesamtgewicht des Mahlguts. Bevorzugt beträgt der teilchenförmige Feststoff nicht weniger als 30 Gew.-% und vorzugsweise nicht weniger als 50 Gew.-% des Mahlguts.

Die Menge des Harzes in dem Mahlgut kann in einem weiten Bereich schwanken, beträgt aber bevorzugt nicht weniger als 10 Gew.-% und vorzugsweise nicht weniger als 20 Gew.-% in Bezug auf das Gesamtgewicht des Mahlguts.

Die Menge des erfindungsgemäßen Dispergierharzes in dem Mahlgut hängt von der Menge des teilchenförmigen Feststoffs ab, beträgt aber bevorzugt von 0,5 bis 5 Gew.-%, bezogen auf das Mahlgut.

Dispersionen und Mahlgüter, welche die Dispergierharze gemäß der vorliegenden Erfindung enthalten, sind insbesondere geeignet für die Verwendung in Farben, vorzugsweise Farben mit hohem Feststoffgehalt, Tinten, vorzugsweise Tinten für Flexodruck, Tiefdruckfarben und Siebdruckfarben. Darüber hinaus eignen sie sich vorteilhaft für den Einsatz in nicht wässrigen keramischen Verfahren, insbesondere bei der Bandbeschichtung, in Streichverfahren mit einer Rakel, oder in Extrusions-, oder Spritzgieß-Verfahren.

Demgemäß offenbart die vorliegende Erfindung auch eine Farbe oder Drucktinte, die einen teilchenförmigen Feststoff, ein filmbildendes Harz, ein organisches Medium und ein Dispergiermittel gemäß der vorliegenden Erfindung umfasst.

Beispiele für geeignete polare Harze als Medium für die Dispersionsform der vorliegenden Erfindung sind solche filmbildenden Harze, die für die Herstellung von Tinten, Farben und Spänen zur Verwendung in zahlreichen Anwendungen wie Farben und Tinten geeignet sind. Beispiele für solche Harze umfassen Polyamide, wie z. B. Versamid* der Fa. BASF SE oder Zelluloseether, wie Ethylzellulose und Ethylhydroxyethylzellulose. Beispiele von Farbharzen umfassen kurzölige Alkyd/Melaminformaldehydharze, Polyester/Melaminformaldehydharze, wärmehärtende Acryl/Melaminformaldehydharze, langölige Alkydharze und mehrschichtige Harze wie Acryl und Harnstoff/Aldehydharze.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

## 1. Herstellung von Polymeren

Für die Herstellung des erfindungsgemäßen Dispergiermittels werden zunächst die Polymere entweder separat (Beispiele 1 und 2) oder in situ (Beispiel 3) durch Ringöffnungspolymerisation hergestellt. Die Zahlen 1:9 bzw. 1:6 in Klammern stellen die Molverhältnisse der Komponenten dar und gibt somit die Kettenlänge der Polymere wieder.

### Polymer 1: Laurinsäure und ε-Caprolacton (1:9)

in einem mit Rührer, Thermometer, Rückflusskühler und Stickstoffeinleitungsrohr versehenen Vierhalskolben werden Laurinsäure (1 mol) und ε-Caprolacton (9 mol) vorgelegt und unter Rühren unter $N_2$ Gas auf 100°C aufgeheizt. Anschließend wird Zirkonium butoxide (0,5%) zugegeben und weiter unter $N_2$ Gas auf 160°C aufgeheizt. Bei dieser Temperatur wird für ca. 4 Stunden gerührt.

Ein gelb gefärbter Feststoff wurde erhalten. Die Reaktion erwies einen Umsatz von über 95%.

### Polymer 2: Laurinsäure und ε-Caprolacton (1:6)

In einem mit Rührer, Thermometer, Rückflusskühler und Stickstoffeinleitungsrohr versehenen Vierhalskolben werden Laurinsäure (1 mol) und ε-Caprolacton (6 mol) vorgelegt und unter Rühren unter $N_2$ Gas auf 100°C aufgeheizt. Anschließend wird Zirkonium butoxide (0,5%) zugegeben und weiter unter $N_2$ Gas auf 160°C aufgeheizt. Bei dieser Temperatur wird für ca. 4 Stunden gerührt.

Ein gelb gefärbter Feststoff wurde erhalten. Die Reaktion erwies einen Umsatz von über 95%.

### Polymer 3: Laurinsäure und ε-Caprolacton, in situ (1:9) und (1:6)

in einem mit Rührer, Thermometer, Rückflusskühler und Stickstoffeinleitungsrohr versehenen Vierhalskolben werden Laurinsäure (1 mol) und ε-Caprolacton (3 mol) vorgelegt und unter Rühren unter $N_2$ Gas auf 100°C aufgeheizt. Anschließend wird der Zirkonium butoxide zugegeben und weiter unter $N_2$ Gas auf 160°C aufgeheizt. Bei dieser Temperatur wird gerührt (ca. 4 Stunden), bis der Umsatz ≥ 90% erreicht wird. Die Temperatur wird auf 105°C reduziert und erneut werden Laurinsäure (1 mol) und ε-Caprolacton (6 mol) unter $N_2$ Gas vorgelegt und für 3 Stunden gerührt. Anschließend wird erneut Zirkonium butoxide (0,5%) zugegeben und weiter unter $N_2$ Gas auf 160°C aufgeheizt. Bei dieser Temperatur wird für ca. 4 Stunden gerührt.

Ein gelb gefärbter Feststoff wurde erhalten. Die Reaktion erwies einen Umsatz von über 95%.

## 2. Herstellung von Dispergiermitteln

### Dispergiermittel 1 (D1)

Polymer 1 (0,25 mol) und Polymer 2 (0,25 mol) wurden auf 65 °C geheizt. Polyethylenimin (1,5 mol bezogen auf primäre Amine, Lupasol PR 8515, MW 2.000, von der BASF SE) und Laurinsäure (0,5 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

### Dispergiermittel 2 (D2)

Polymer 1 (0,30 mol) und Polymer 2 (0,30 mol) wurden auf 65 °C geheizt. Polyethylenimin (1,5 mol bezogen auf primäre Amine, Lupasol PR 8515, MW 2.000, von der BASF SE) und Laurinsäure (0,4 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 3 (D3)**

Polymer 1 (0,30 mol) und Polymer 2 (0,30 mol) wurden auf 65 °C geheizt. Polyethylenimin (1,5 mol bezogen auf primäre Amine, Lupasol PR 8515, MW 2.000, von der BASF SE) und Laurinsäure (0,3 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 4 (D4)**

Polymer 1 (0,275 mol) und Polymer 2 (0,275 mol) wurden auf 65 °C geheizt; Polyethylenimin (1,5 mol bezogen auf primäre Amine, Lupasol PR 8515, MW 2.000, von der BASF SE) und Laurinsäure (0,45 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 5 (D5)**

Polymer 1 (0,25 mol) und Polymer 2(0,25 mol) wurden auf 65 °C geheizt; Polyethylenimin (1,5 mol bezogen auf primäre Amine, Lupasol PR 8515, MW 2.000, von der BASF SE) und Laurinsäure (0,4 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 6 (D6)**

Polymer 1 (0,225 mol) und Polymer 2 (0,225 mol) wurden auf 65 °C geheizt; Polyethylenimin (1,5 mol bezogen auf primäre Amine, Lupasol PR 8515, MW 2.000, von der BASF SE) und Laurinsäure (0,45 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 7 (D7)**

Polymer 1 (0,225 mol) und Polymer 2 (0,225 mol) wurden auf 65 °C geheizt; Polyethylenimin (1,5 mol bezogen auf primäre Amine, Lupasol PR 8515, MW 2.000, von der BASF SE) und Laurinsäure (0,55 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 8 (D8)**

Polymer 3 (0,5 mol) wurde auf 65 °C geheizt, Polyethylenimin (1,50 mol bezogen auf primäre Amine, Lupasol PR 8515, MW 2.000, von der BASF SE) und Laurinsäure (0,4 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 9 (D9)**

Polymer 3 (0,6 mol) wurde auf 65 °C geheizt, Polyethylenimin (1,50 mol bezogen auf primäre Amine, Lupasol PR 8515, MW 2.000, von der BASF SE) und Laurinsäure (0,4 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

**Dispergiermittel 10 (D10)**

Polymer 3 (0,55 mol) wurde auf 65 °C geheizt, Polyethylenimin (1,50 mol bezogen auf primäre Amine, Lupasol PR 8515, MW 2.000, von der BASF SE) und Laurinsäure (0,35 mol) wurden zugegeben. Die Mischung wurde für 4 Stunden bei 160 °C und 15 mbar gerührt. Beim Abkühlen wurde das Produkt als eine amberfarbige viskose Flüssigkeit erhalten.

Bei Lagerung bis zu zwei Monaten bei Raumtemperatur konnte bei allen erfindungsgemäßen Dispergiermitteln keine Veränderungen der amberfarbige viskose Flüssigkeit festgestellt werden.

### 3. Herstellung von Vergleichs-Dispergiermitteln

**Vergleich-Dispergiermittel 1 (VD1)**

Polymer 1 (1,10 mol) aus Beispiel 1 wurde auf 65 °C geheizt, Polyethylenimin (1,50 mol bezogen auf primäre Amine, Lupasol PR 8515, MW 2.000, von der BASF SE) und Laurinsäure (0,50 mol) wurden zugegeben. Die Mischung wurde für 4 Stunden bei 160 °C und 15 mbar gerührt. Beim Abkühlen wurde das Produkt als ein gelber Feststoff erhalten.

**Vergleich-Dispergiermittel 2 (VD2)**

Polymer 1 (0,45 mol) wurde auf 65 °C geheizt, Polyethylenimin (1,50 mol bezogen auf primäre Amine, Lupasol PR 8515, MW 2.000, von der BASF SE) und Laurinsäure (0,55 mol) wurden zugegeben. Die Mischung wurde für 4 Stunden bei 160 °C und 15 mbar gerührt. Beim Abkühlen wurde das Produkt als amberfarbige viskose Flüssigkeit die aber über die Zeit fest wird.

**Vergleich-Dispergiermittel 3 (VD3)**

Polymer 1 (0,50 mol) wurde auf 65 °C geheizt, Polyethylenimin (1,50 mol bezogen auf primäre Amine, Lupasol PR 8515, MW 2.000, von der BASF SE) und Laurinsäure (0,7 mol) wurden zugegeben. Die Mischung wurde für 4 Stunden bei 160 °C und 15 mbar gerührt. Beim Abkühlen kristallisiert das Produkt aus.

**Vergleich-Dispergiermittel 4 (VD4)**

Polymer 1 (0,60 mol) wurde auf 65 °C geheizt, Polyethylenimin (1,50 mol bezogen auf primäre Amine, Lupasol PR 8515, MW 2.000, von der BASF SE) und Laurinsäure (0,4 mol) wurden zugegeben. Die Mischung wurde für 4 Stunden bei 160 °C und 15 mbar gerührt. Beim Abkühlen kristallisiert das Produkt aus.

### 4. Bestimmung von Säurezahl und Aminzahl

**4.1** Säurezahl

Die Bestimmung des Umsetzungsgrades erfolgt über eine volumetrische Ermittlung der Säurezahl (SZ). Die Säurezahl gibt die Masse an mg KOH an, die notwendig ist, um die in 1 g Produkt enthaltenen freien Säuren zu neutralisieren. Die Methode wurde in Anlehnung an DGF C-V 2, Ph.EUR. 2.5.1, ISO 3682, ASTM D 974, DIN EN ISO 2114 erstellt.

Zur Bestimmung der Säurezahl wird die Probe in einem geeigneten Lösungsmittel gelöst und im Anschluss werden die anwesenden freien Säuren mit Kalilauge titriert. Als Lösungsmittel wird eine Mischung aus Ethanol und Toluol im Verhältnis 1:1 verwendet. Andere mögliche Lösungsmittel sind z. B. Ethanol oder Isopropanol, wobei die alternativen Lösungsmittel keinen Einfluss auf das Ergebnis der Messmethode haben. Die verwendeten Lösungsmittel bzw. Lösungsmittelgemische sind lediglich im Vorfeld gegen Phenolphthalein zu neutralisieren, um eine Verfälschung des Analysenergebnisses zu vermeiden. Als Titrant kommt unter anderen 0,5 N Kalilauge, 0,1 N Kalilauge bzw. 0,02 N Kalilauge in Frage. Als Lösungsmittel für die Kalilauge kommt Wasser oder Ethanol in Frage. Als Indikator für das Erreichen des Umschlagpunktes kann z. B. mit einer 1 %-igen Phenolphthaleinlösung in Ethanol gearbeitet werden. Zur eigentlichen Durchführung wird die zu untersuchende Probe auf 0,1 gew.-% genau eingewogen. Im Anschluss werden ca. 50 - 100 ml des neutralisierten Lösungsmittels hinzugegeben und die Probe, sofern notwendig, unter leichtem Erwärmen gelöst. Nach Zusatz der Phenolphthaleinlösung wird mit eingestellter Kalilauge bis zum bleibenden Farbumschlag titriert. Zur Auswertung wird die folgende Berechnungsformel verwendet:

$$\text{Säurezahl [mg KOH/g]} = \frac{V \times M\ KOH \times N}{E}$$

V = Verbrauch an Titrant [ml]
N = Normalität Titrant
E = Einwaage Probe [g]
M KOH = Molare Masse von KOH

4.2 Aminzahl

Die Aminzahl kann mittels einer Methode in Anlehnung an AOCS Tf 1b-64, Afnor T-73-204, DIN EN ISO 4315 bestimmt werden. Zur Bestimmung der Aminzahl wird die Probe in einem geeigneten Lösungsmittel gelöst und im Anschluss werden die anwesenden freien Amine mit einer standardisierten Säure gegen einen Indikator titriert. Die Aminzahl (AZ) gibt die mg KOH an, die der Basizität von 1 g Probe entsprechen. Eine entsprechende Probenmenge wird auf 0,1 gew.-% genau, direkt in einem Erlenmeyerkolben oder Becherglas eingewogen und mit ca. 100 ml Ethanol oder Isopropanol ggf. unter Erwärmen gelöst. Nach Zugabe von einigen Tropfen Bromphenolblaulösung wird mit der Salzsäurelösung bis zum Farbumschlag von blau nach gelb titriert.

$$AZ\ [\text{mg KOH/g}] = \frac{\text{ml Verbrauch} * m * 56{,}109 * f}{E}$$

AZ = Aminzahl
E= Einwaage in g
56,109= Molare Masse KOH
m= Molarität der Salzsäurelösung
f= Faktor der Salzsäurelösung

**Tabelle 1: Säurezahl und Aminzahl**

| | SZ (mgKOH/g) | AZ (mgKOH/g) |
|---|---|---|
| Polymer 1 | 63,4 | - |
| Polymer 2 | 45,7 | - |
| Polymer 3 | 54,5 | - |
| D1 | 1,5 | 147 |
| D2 | 1,6 | 135 |
| D3 | 1,6 | 136 |
| D4 | 1,6 | 138 |
| D5 | 1,6 | 151 |
| D6 | 1,6 | 157 |
| D7 | 1,6 | 151 |
| D8 | 1,6 | 145 |
| D9 | 1,6 | 130 |
| D10 | 1,6 | 141 |
| VD 1 | 1,8 | 131 |
| VD 2 | 1,9 | 141 |
| VD 3 | 2,1 | 121 |
| VD 4 | 1,7 | 129 |

## 5. Anwendungstechnische Beurteilung

Für die Herstellung der Pigmentkonzentrate und Farbpasten wurden die folgenden allgemeinen Verfahrensparameter festgelegt und eingestellt:

- Vermahlungsmaschine: Speed Mixer DAC 150 FVZ (Hauschild Company)
- Vermahlungsbehälter: FLACKTEK Behälter max. 100
- Perlen: Zirconium Silicate Perlen (Durchmesser: 0,6 - 0,8 mm)

(fortgesetzt)

- Pigmentkonzentrat Menge:
  Für organische Pigmente und Ruß: 50,0 g
  Für anorganische Pigmente: 30,0 g
- Vermahlungszeit: Organische Pigmente und Ruß: 5 min
  Anorganische Pigmente: 3 min
- Geschwindigkeit: 2.000 rpm für das Pigmentkonzentrat
  3.000 rpm für die Farbpaste

Folgende Pigmente wurden eingesetzt:

Bayferrox 3920 der Fa. Lanxess mit Color Index PY42
Heliogen Blue L7085 der Fa. BASF mit Color Index PB15:3
Color black FW 200 der Fa. Evonik mit Color Index PBk 7

**5.1 Pigmentkonzentrate**

Für die anwendungstechnische Beurteilung wurden Pigmentkonzentrate gemäß der Formulierungen aus Tabelle 2 hergestellt.

**Tabelle 2:**

| | **Anorganisches Pigmentkonzentrat** | **Organisches Pigmentkonzentrat** | **Rußkonzentrat** |
|---|---|---|---|
| **Butyl acetate (Lösungsmittel)** | 2,6 g | 7,7 g | 7,2 g |
| **Dispergiermittel bzw. VergleichsDispergiermittel** | 1,8 g | 2,5 g | 7,1 g |
| **TEGO® VariPlus LK (Harz)** | 20,6 g | 27,3 g | 26,2 g |
| **Bayferrox 3920** | 25,0 g | | |
| **Heliogen Blue L7085** | | 12,5 g | |
| **Color Black FW 200** | | | 9,5 g |
| **Summe** | 50,0 g | 50,0 g | 50,0 g |

Alle Rohstoffe aus Tabelle 2, außer das jeweilige Pigment, werden zunächst in einem Behälter gewogen, anschließend miteinander homogenisiert. Danach wird das Pigment zugegeben und mit den Rohstoffen vermischt.
Zur Vermahlung des jeweiligen Pigments wurden Perlen zum Gemisch zugegeben und unter Rühren vermahlen.
Alle vermahlenen Pigmentkonzentrate wurden anschließend gekühlt und filtriert.

**5.2 Farbpaste**

Zur Herstellung der Farbpaste wurde ein_aromatenfreies Alkyd Bindemittel von der Firma Brillux mit dem Produktname Impredur 840 als Basis Lack verwendet. Tabelle 3 zeigt die Mischungsverhältnisse zwischen Basislack und Pigmentkonzentrat auf.

**Tabelle 3:**

| | **Farbpaste Heliogen Blue L 7085** | **Farbpaste Bayferrox 3920** | **Farbpaste Color Black FW 200** |
|---|---|---|---|
| Basis Lack | 20 g | 20 g | 20 g |
| Organisches Pigmentkonzentrat | 0,64 g | | |

(fortgesetzt)

| | **Farbpaste Heliogen Blue L 7085** | **Farbpaste Bayferrox 3920** | **Farbpaste Color Black FW 200** |
|---|---|---|---|
| Anorganisches Pigmentkonzentrat | | 0,80 g | |
| Rußkonzentrat | | | 0,84 g |

Zunächst wird der Basis Lack in einem Flacktek Behälter eingewogen. Mit dem Speed Mixer wurde der Basis Lack und das Pigmentkonzentrat für 1 Min. bei 3.000 rpm vermischt. Die hergestellten Farbpasten werden zur weiteren anwendungstechnischen Tests verwendet.

### 5.3 Anwendungstechnische Tests

#### 5.3.1 Rub-out Test:

Für den "rub out Test" wurden die Farbpasten mit einem 150 μm drowdown bar von Leneta auf einer Platte appliziert. Nach 5 Minuten Trockenzeit wurde der ‚rub-out Test' durchgeführt, der darin besteht, den aufgezogenen Lack anzureiben. Die Farbwerte werden entsprechend bestimmt vor und nach dem Anreiben und der ΔE (Delta E) bzw. Farbdifferenzen berechnet, der als Maß für den Abstand zweier Farben verwendet wird und entsprechend eine Aussage bezüglich der Pigmentstabilisierung beim Durchführen vom "rub out Test" ermöglicht. Bei der Angabe von Farbdifferenzen bezeichnet der Wert 1 oder kleiner 1 einen Abstand, den das menschliche Auge nicht mehr wahrnimmt.

#### 5.3.2 Farbstärke

Die kolorimetrischen Werte wurden mit einem Spektrometer Model SP 62 von X-Rite bestimmt. Die Farbstärke F wurde anhand der folgenden Messung bestimmt:

$$F = \frac{(100 - Y)^2}{2\,Y}$$

Y = ist das Reflexionsvermögen der Wellenlänge der maximalen Absorption

Die Farbstärke gibt eine Aussage bezüglich der Farbintensität, die je nach Pigment aber auch je nach Dispergiermittel und Vermahlungsprozess variieren kann. Je höher die Farbstärke ist, umso besser ist das Dispergiermittel.

#### 5.3.3 Viskosität der Pasten

Für die rheologischen Viskositätsprofile wurde der RheoStress 1 von der Firma Thermo HAAKE verwendet. Die dynamischen Viskositätskurven wurde bei einer Temperatur von 25°C t 0.5 mit der Parallelplatten Messgeometrie bestimmt. Je geringer die Viskosität der Paste, umso besser das Dispergiermittel

Die Ergebnisse sind in den Tabellen 4, 5 und 6 zusammengefasst.

**Tabelle 4: Farbpaste Heliogen Blue L 7085**

| Pigment | Dispergiermittel | F | ΔE | Pasten Viskosität (mPa*s) |
|---|---|---|---|---|
| Heliogen Blue L 7085 | D1 | 47,9 | 0,62 | 7533 |
| | D2 | 46,45 | 0,44 | 6382 |
| | D3 | 45,21 | 0,64 | 9362 |
| | D4 | 46,55 | 0,48 | 7068 |
| | D5 | 46,68 | 0,43 | 7014 |
| | D6 | 47,35 | 0,33 | 6887 |
| | D7 | 46,87 | 0,47 | 7920 |
| | D8 | 46,57 | 0,36 | 7576 |
| | D9 | 47,63 | 0,34 | 7301 |
| | D10 | 47,68 | 0,33 | 4313 |
| | VD 1 | 49,07 | 0,56 | 8247 |
| | VD2 | 45,98 | 0,51 | 9111 |
| | VD 3 | 46,08 | 0,48 | 7424 |
| | VD4 | 48,01 | 0,35 | 3423 |

**Tabelle 5: Farbpaste Bayferrox 3920**

| Pigment | Dispergiermittel | F | ΔE | Pasten Viskosität (mPa*s) |
|---|---|---|---|---|
| **Bayferrox 3920** | D1 | 6,36 | 0,64 | 6996 |
| | D2 | 6,53 | 0,24 | 6981 |
| | D3 | 6,27 | 0,75 | 9229 |
| | D4 | 5,97 | 1,23 | 10140 |
| | D5 | 6,53 | 0,21 | 8747 |
| | D6 | 5,86 | 1,58 | 13000 |
| | D7 | 5,64 | 1,06 | 11380 |
| | D8 | 6,67 | 0,43 | 8156 |
| | D9 | 6,7 | 0,44 | 7121 |
| | D10 | 6,78 | 0,21 | 6945 |
| | VD 1 | 6,63 | 0,44 | 7295 |
| | VD2 | 6,45 | 0,35 | 7777 |
| | VD 3 | 6,53 | 0,41 | 6110 |
| | VD4 | 6,85 | 0,45 | 6975 |

**Tabelle 6: Farbpaste Color Black FW 200**

| Pigment | Dispergiermittel | F | ∆E | Pasten Viskosität (mPa's) |
|---|---|---|---|---|
| **Color Black FW 200** | D1 | 142,79 | 0,09 | 1079 |
| | D2 | 141,14 | 0,1 | 1219 |
| | D3 | 142,11 | 0,28 | 923 |
| | D4 | 141,98 | 0,28 | 942 |
| | D5 | 140,86 | 0,19 | 1000 |
| | D6 | 140,96 | 0,15 | 1164 |
| | D7 | 141,54 | 0,21 | 1034 |
| | D8 | 142,95 | 0,09 | 1002 |
| | D9 | 141,24 | 0,16 | 997 |
| | D10 | 142,57 | 0,08 | 984 |
| | VD 1 | 141,57 | 0,38 | 1002 |
| | VD 2 | 137,85 | 0,57 | 3073 |
| | VD 3 | 142,08 | 0,33 | 1171 |
| | VD4 | 142,38 | 0,14 | 867 |

Anhand der durchgeführten anwendungstechnischen Tests konnte festgestellt werden, dass die erfindungsgemäßen Dispergiermittel sich nicht signifikant von denen aus dem Stand der Technik (Vergleichsdispergiermittel) unterscheiden. Die Farbstärke, die Pasten Viskosität und die delta E Werte der erfindungsgemäßen Dispergiermittel unterscheiden sich kaum von denen aus dem Stand der Technik.

Zusammenfassend kann festgestellt werden, dass die erfindungsgemäßen Dispergiermittel im Großen und Ganzen als lösungsmittelfreie Additive zur Herstellung von verschiedenen Pigmentkonzentraten eingesetzt werden können. Die erfindungsgemäßen Dispergiermittel sind sowohl für organische als auch für anorganische Pigmente geeignet. Die Verwendung mit rußhaltigen Pigmenten ist ebenfalls möglich. Darüber hinaus können insbesondere die in situ hergestellten Polymere (A) weitere zeit- und kostenintensive Herstellungsschritte eingespart werden.

## Patentansprüche

1. Dispergiermittel auf Basis von Polyaminen oder Polyiminen gemäß der Formel (I)

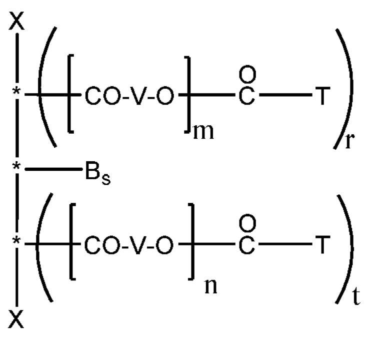

Formel (I)

worin

X-*-*-*-X ein Polyamin oder Polyimin ist, wobei sie primäre Aminogruppen aufweisen,

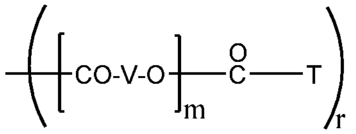

und

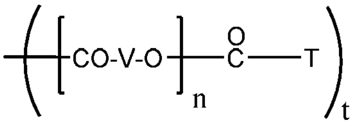

Poly-(oxy-$C_{1-6}$-alkylencarbonyl)-Verbindungen sind mit T = eine gesättigte oder ungesättigte Alkylgruppe, V = eine Alkylen- oder Alkenylengruppe der jeweiligen Hydroxy-$C_{1-6}$-alkylencarbonsäuren oder des Lactons, m und n = jeweils 3 bis 40, wobei m und n voneinander verschieden sind,
r und t = jeweils 1 bis 100, und
B = Seitenketten basierend auf Alkylsäuren mit s = 1 bis 100, wobei die Alkylsäuren ausgewählt sind aus der Gruppe Essig-, Methoxyessig-, Propion-, Pentan-, Hexan-, Capryl-, Caprin-, Laurinoder Stearinsäure.

2. Dispergiermittel nach Anspruch 1, **dadurch gekennzeichnet, dass** die Poly-(oxy-$C_{1-6}$-alkylencarbonyl)-Verbindungen gebildet werden aus der Gruppe von linearen Hydroxy-$C_{1-6}$-alkylencarbonsäuren.

3. Dispergiermittel nach Anspruch 1, **dadurch gekennzeichnet, dass** die Poly-(oxy-$C_{1-6}$-alkylencarbonyl)-Verbindungen gebildet werden aus $\delta$-Valerolacton oder $\varepsilon$-Caprolacton.

4. Dispergiermittel nach einem der vorgenannten Ansprüche, **dadurch gekennzeichnet, dass** das Polyimin ein Polyethylenimin ist.

5. Dispergiermittel nach einem der vorgenannten Ansprüche, **dadurch gekennzeichnet, dass** das Dispergiermittel eine Säurezahl < 10 mg KOH/g, bevorzugt < 5 mg KOH/g aufweist.

6. Dispergiermittel nach einem der vorgenannten Ansprüche, **dadurch gekennzeichnet, dass** das Dispergiermittel eine Aminzahl (AZ) von > 100 mg KOH/g, bevorzugt > 120 mg KOH/g aufweist.

7. Verfahren zur Herstellung von Dispergiermitteln nach Anspruch 1 umfassend die Umsetzung von Polyaminen oder Polyiminen mit mindestens zwei oder mehreren Polymeren basierend auf Poly-(oxy-$C_{1-6}$-alkylencarbonyl)-Verbindungen gemäß

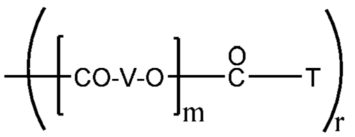

und

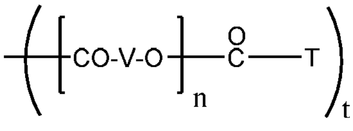

mit T = eine gesättigte oder ungesättigte Alkylgruppe, V = eine Alkylen- oder Alkenylengruppe der jeweiligen Hydroxy-$C_{1-6}$-alkylencarbonsäuren oder des Lactons, m und n = jeweils 3 bis 40, wobei m und n voneinander verschieden sind, r und t = jeweils 1 bis 100,
und Alkylsäuren ausgewählt aus der Gruppe Essig-, Methoxyessig-, Propion-, Pentan-, Hexan-, Capryl-, Caprin-, Laurin- oder Stearinsäure, wobei eine Amidierung von Alkylsäuren mit den Polyaminen oder Polyiminen stattfindet.

**8.** Verfahren nach Anspruch 7, **dadurch gekennzeichnet, dass** das molare Verhältnis der Summe aus Poly-(oxy-$C_{1-6}$-alkylencarbonyl)-Verbindungen und Alkylsäuren zu primären Aminogruppen der eingesetzten Polyamine oder Polyimine kleiner 1, bevorzugt kleiner 0,9, ist.

**9.** Verfahren nach Anspruch 7 oder 8, **dadurch gekennzeichnet, dass** das molare Verhältnis zwischen den zwei oder mehreren unterschiedlichen Poly-(oxy-$C_{1-6}$-alkylencarbonyl)-Verbindungen und der Alkylsäuren zwischen 90/10 und 10/90, bevorzugt zwischen 80/20 und 20/80 und besonders bevorzugt zwischen 70/30 und 30/70 liegt.

**10.** Verfahren nach einem der Ansprüche 7-9, **dadurch gekennzeichnet, dass** die Polymeren separat oder in situ durch Polymerisation der Poly-(oxy-$C_{1-6}$-alkylencarbonyl)-Verbindungen hergestellt werden und dann für die Umsetzung mit Polyaminen oder Polyiminen und Alkylsäuren eingesetzt werden.

**11.** Verfahren nach einem der Ansprüche 7 - 10, **dadurch gekennzeichnet, dass** die Poly-(oxy-$C_{1-6}$-alkylencarbonyl)-Verbindungen aus linearen Hydroxy-$C_{1-6}$-alkylencarbonsäuren oder Lactonen gebildet werden.

**12.** Verfahren nach einem der Ansprüche 7 - 11, **dadurch gekennzeichnet, dass** die Poly-(oxy-$C_{1-6}$-alkylencarbonyl)-Verbindungen aus δ-Valerolactone oder ε-Caprolactone gebildet werden.

**13.** Verfahren nach einem der Ansprüche 7 - 12, **dadurch gekennzeichnet, dass** die Alkylsäuren ausgewählt sind aus der Gruppe Essig-, Methoxyessig-, Propion-, Pentan-, Hexan-, Laurin-, oder Stearinsäure.

**14.** Verfahren nach einem der Ansprüche 7 - 13, **dadurch gekennzeichnet, dass** die Alkylsäuren mit dem Polymerisationsinitiator zur Herstellung der Polymeren übereinstimmen.

**15.** Verfahren nach einem der Ansprüche 7 - 14, **dadurch gekennzeichnet, dass** das Polyimin ein Polyethylenimin ist.

**16.** Zusammensetzung enthaltend einen teilchenförmigen Feststoff und ein Dispergiermittel nach einem der Ansprüche 1 bis 6.

**17.** Verwendung der Zusammensetzung nach Anspruch 16 zur Herstellung von Dispersionen, Mahlgut, Farben oder Drucktinte.

## Claims

**1.** Dispersants based on polyamines or polyimines of the formula (I)

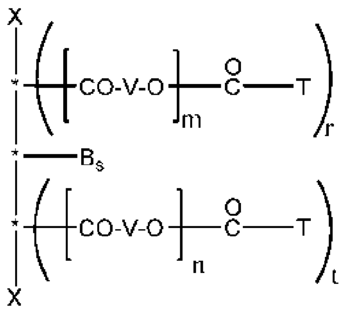

Formula (I)

in which

X-*-*-*-X is a polyamine or polyimine, which have primary amino groups,

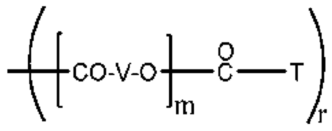

and

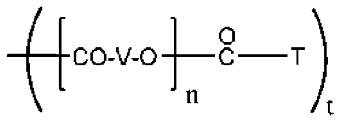

are poly(oxy-$C_{1-6}$-alkylenecarbonyl) compounds
with T = a saturated or unsaturated alkyl group, V = an alkylene or alkenylene group of the particular hydroxy-$C_{1-6}$-alkylenecarboxylic acids or of the lactone, m and n = each 3 to 40, where m and n are different from one another,
r and t = each 1 to 100, and
B = side chains based on alkyl acids with s = 1 to 100, where the alkyl acids are selected from the group of acetic acid, methoxyacetic acid, propionic acid, pentanoic acid, hexanoic acid, caprylic acid, capric acid, lauric acid and stearic acid.

2. Dispersants according to Claim 1, **characterized in that** the poly(oxy-$C_{1-6}$-alkylenecarbonyl) compounds are formed from the group of linear hydroxy-$C_{1-6}$-alkylenecarboxylic acids.

3. Dispersants according to Claim 1, **characterized in that** the poly(oxy-$C_{1-6}$-alkylenecarbonyl) compounds are formed from δ-valerolactone or ε-caprolactone.

4. Dispersants according to any of the preceding claims, **characterized in that** the polyimine is a polyethyleneimine.

5. Dispersants according to any of the preceding claims, **characterized in that** the dispersant has an acid number of < 10 mg KOH/g, preferably < 5 mg KOH/g.

6. Dispersants according to any of the preceding claims, **characterized in that** the dispersant has an amine number (AmN) of > 100 mg KOH/g, preferably > 120 mg KOH/g.

7. Method for preparing dispersants according to Claim 1, comprising the reaction of polyamines or polyimines with at least two or more polymers based on poly(oxy-$C_{1-6}$-alkylenecarbonyl) compounds:

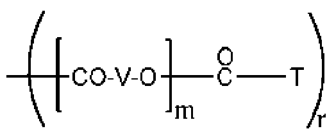

and

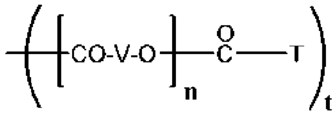

with T = a saturated or unsaturated alkyl group, V = an alkylene or alkenylene group of the particular hydroxy-$C_{1-6}$-alkylenecarboxylic acids or of the lactone, m and n = each 3 to 40, where m and n are different from one another, r and t = each 1 to 100,
and alkyl acids selected from the group of acetic acid, methoxyacetic acid, propionic acid, pentanoic acid, hexanoic acid, caprylic acid, capric acid, lauric acid and stearic acid, wherein an amidation of alkyl acids with the polyamines or polyimines takes place.

**8.** Method according to Claim 7, **characterized in that** the molar ratio of the sum total of poly(oxy-$C_{1-6}$-alkylenecarbonyl) compounds and alkyl acids to primary amino groups of the polyamines or polyimines used is less than 1, preferably less than 0.9.

**9.** Method according to Claim 7 or 8, **characterized in that** the molar ratio between the two or more different poly(oxy-$C_{1-6}$-alkylenecarbonyl) compounds and the alkyl acids is between 90/10 and 10/90, preferably between 80/20 and 20/80 and more preferably between 70/30 and 30/70.

**10.** Method according to any of Claims 7-9, **characterized in that** the polymers are prepared separately or in situ by polymerization of the poly(oxy-$C_{1-6}$-alkylenecarbonyl) compounds and then are used for the reaction with polyamines or polyimines and alkyl acids.

**11.** Method according to any of Claims 7-10, **characterized in that** the poly(oxy-$C_{1-6}$-alkylenecarbonyl) compounds are formed from linear hydroxy-$C_{1-6}$-alkylenecarboxylic acids or lactones.

**12.** Method according to any of Claims 7-11, **characterized in that** the poly(oxy-$C_{1-6}$-alkylenecarbonyl) compounds are formed from δ-valerolactone or ε-caprolactone.

**13.** Method according to any of Claims 7-12, **characterized in that** the alkyl acids are selected from the group of acetic acid, methoxyacetic acid, propionic acid, pentanoic acid, hexanoic acid, lauric acid and stearic acid.

**14.** Method according to any of Claims 7-13, **characterized in that** the alkyl acids correspond to the polymerization initiator for preparation of the polymers.

**15.** Method according to any of Claims 7-14, **characterized in that** the polyimine is a polyethyleneimine.

**16.** Composition comprising a particulate solid and a dispersant according to any of Claims 1 to 6.

**17.** Use of the composition according to Claim 16 for production of dispersions, millbases, inks or printing ink.

**Revendications**

**1.** Dispersant à base de polyamines ou de polyimines selon la formule (I)

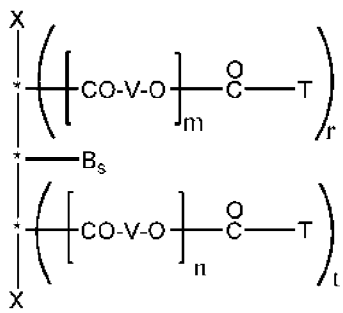

Formule (I)

dans laquelle

X-*-*-*-X représente une polyamine ou une polyimine, présentant des groupes amino primaires,

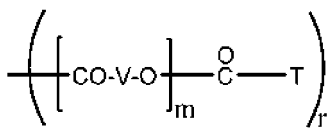

et

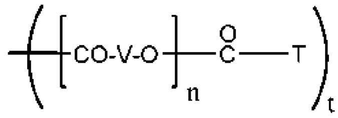

étant des composés poly(oxy-$C_{1-6}$-alkylènecarbonyle)
avec T = un groupe alkyle saturé ou insaturé, V = un groupe alkylène ou alcénylène des acides hydroxy-$C_{1-6}$-alkylènecarboxyliques respectifs ou de la lactone, m et n = respectivement 3 à 40, m et n étant différents l'un de l'autre,
r et t = respectivement 1 à 100 et
B = des chaînes latérales à base d'acides alkyliques avec s = 1 à 100, les acides alkyliques étant choisis dans le groupe acide acétique, acide méthoxyacétique, acide propionique, acide pentanoïque, acide hexanoïque, acide caprylique, acide caprique, acide laurique ou acide stéarique.

2. Dispersant selon la revendication 1, **caractérisé en ce que** les composés poly(oxy-$C_{1-6}$-alkylènecarbonyle) sont formés à partir du groupe des acides hydroxy-$C_{1-6}$-alkylènecarboxyliques linéaires.

3. Dispersant selon la revendication 1, **caractérisé en ce que** les composés poly(oxy-$C_{1-6}$-alkylènecarbonyle) sont formés à partir de $\delta$-valérolactone ou d'$\varepsilon$-caprolactone.

4. Dispersant selon l'une des revendications susmentionnées, **caractérisé en ce que** la polyimine est une polyéthylénimine.

5. Dispersant selon l'une des revendications susmentionnées, **caractérisé en ce que** le dispersant présente un indice d'acide < 10 mg de KOH/g, de préférence < 5 mg de KOH/g.

6. Dispersant selon l'une des revendications susmentionnées, **caractérisé en ce que** le dispersant présente un indice d'amine (AZ) > 100 mg de KOH/g, de préférence > 120 mg de KOH/g.

7. Procédé de préparation de dispersants selon la revendication 1 comprenant la transformation de polyamines ou de polyimines avec au moins deux polymères ou plus à base de composés poly (oxy-$C_{1-6}$-alkylènecarbonyle) selon

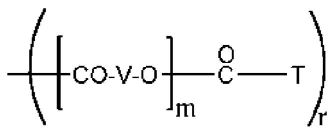

et

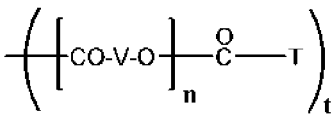

avec T = un groupe alkyle saturé ou insaturé, V = un groupe alkylène ou alcénylène des acides hydroxy-$C_{1-6}$-alkylènecarboxyliques respectifs ou de la lactone, m et n = respectivement 3 à 40, m et n étant différents l'un de l'autre, r et t = respectivement 1 à 100,
et des acides alkyliques choisis dans le groupe acide acétique, acide méthoxyacétique, acide propionique, acide pentanoïque, acide hexanoïque, acide caprylique, acide caprique, acide laurique ou acide stéarique, une amidation d'acides alkyliques avec les polyamines ou polyimines ayant lieu.

8. Procédé selon la revendication 7, **caractérisé en ce que** le rapport molaire de la somme des composés poly(oxy-$C_{1-6}$-alkylènecarbonyle) et des acides alkyliques aux groupes amino primaires des polyamines et des polyimines utilisées est inférieur à 1, de préférence inférieur à 0,9.

9. Procédé selon la revendication 7 ou 8, **caractérisé en ce que** le rapport molaire entre les deux composés poly(oxy-$C_{1-6}$-alkylènecarbonyle) différents, ou plus, et les acides alkyliques est situé entre 90/10 et 10/90, de préférence

entre 80/20 et 20/80 et de manière particulièrement préférée entre 70/30 et 30/70.

**10.** Procédé selon l'une des revendications 7-9, **caractérisé en ce que** les polymères sont préparés séparément ou in situ par polymérisation des composés poly(oxy-$C_{1-6}$-alkylènecarbonyle) et ensuite utilisés pour la transformation avec des polyamines ou des polyimines et des acides alkyliques.

**11.** Procédé selon l'une des revendications 7-10, **caractérisé en ce que** les composés poly (oxy-$C_{1-6}$-alkylènecarbonyle) sont formés à partir d'acides hydroxy-$C_{1-6}$-alkylènecarboxyliques linéaires ou de lactones.

**12.** Procédé selon l'une des revendications 7-11, **caractérisé en ce que** les composés poly (oxy-$C_{1-6}$-alkylènecarbonyle) sont formés à partir de $\delta$-valérolactone ou d'$\varepsilon$-caprolactone.

**13.** Procédé selon l'une des revendications 7-12, **caractérisé en ce que** les acides alkyliques sont choisis dans le groupe acide acétique, acide méthoxyacétique, acide propionique, acide pentanoïque, acide hexanoïque, acide laurique ou acide stéarique.

**14.** Procédé selon l'une des revendications 7-13, **caractérisé en ce que** les acides alkyliques correspondent à l'initiateur de polymérisation pour la préparation des polymères.

**15.** Procédé selon l'une des revendications 7-14, **caractérisé en ce que** la polyimine est une polyéthylénimine.

**16.** Composition contenant une charge particulaire et un dispersant selon l'une des revendications 1 à 6.

**17.** Utilisation de la composition selon la revendication 16, pour la préparation de dispersions, d'un produit broyé, de peintures ou d'encres d'impression.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9421368 A
- WO 9955763 A
- WO 0121298 A
- EP 1999185 A
- GB 1508576 A
- GB 2108143 A


### In der Beschreibung aufgeführte Nicht-Patentliteratur


- Carbon-13 NMR analysis of branched polyethylenimine. *Zeitschrift Journal of Macromolecular Science,* 1985, vol. A22 (5-7), 877
- Klassen von Pigmenten. Colour Index. 1971
- **VON CROWLEY et al.** A Three Dimensional Approach to Solubility. *Journal of Paint Technology,* 1966, vol. 38, 269
- **IBERT MELLAN.** Compatibility and Solubility. Noyes Development Corporation, 1968, 39-40